# EUROPEAN PATENT SPECIFICATION

(11) **EP 3 168 747 B1**
(45) Date of publication and mention of the grant of the patent: **06.06.2018**
(21) Application number: 16163642.8
(22) Date of filing: 04.04.2016
(51) Int. Cl.: G06F 11/30, G06F 11/14, G06F 17/30, G06F 8/65, H04W 4/06, G06F 11/34, G06F 17/40

(54) **METHOD AND DEVICE FOR MONITORING A FILE IN A SYSTEM PARTITION**
VERFAHREN UND VORRICHTUNG ZUR ÜBERWACHUNG EINER DATEI IN EINER SYSTEMPARTITION
PROCÉDÉ ET DISPOSITIF POUR SURVEILLER UN FICHIER DANS UNE CLOISON DE SYSTÈME

(30) Priority: 13.11.2015 CN 201510780666
(43) Date of publication of application: 17.05.2017
(73) Proprietor: Xiaomi Inc., Beijing 100085 (CN)
(72) Inventor: LI, Minghao, 100085 Beijing (CN); WANG, Le, 100085 Beijing (CN); ZHU, Ruixian, 100085 Beijing (CN)
(74) Representative: Sackin, Robert

(56) References cited:
- EP-A1- 2 584 484
- WO-A2-2014/102523
- US-A1- 2010 070 776
- US-A1- 2014 165 190
- US-B1- 7 472 420
- Anonymous: "FileObserver | Android Developers", , 6 September 2015 (2015-09-06), XP055355835, Retrieved from the Internet: URL:http://web.archive.org/web/20150906012 851/http://developer.android.com/reference /android/os/FileObserver.html#onEvent(int, java.lang.String) [retrieved on 2017-03-17]

## Description

### FIELD

The present disclosure generally relates to method and device for monitoring a file in a system partition.

### BACKGROUND

A smart mobile terminal's Operation System such as Android system frequently has a requirement for upgrade. At present, the version upgrade of the mobile terminal's operation system is usually implemented through Over-the-Air (OTA) technology. However, errors such as an upgrade failure often occur at the time of performing an OTA version upgrade. Mostly, the occurrences of these errors result from the fact that a file(s) in a system partition of the mobile terminal's operation system has been accidently modified or been tampered with by third-party software. As a result, some system files may be incomplete, lost, or a new file may be added. Accordingly, the system upgrade cannot be performed normally.
US patent application with publication No. US 2014/0165190 A1 disclose a system and method for using file system events to trigger a security scan.
European patent application with publication No. EP 2584484 A1 discloses a system and method for protecting a computer system from the activity of malicious objects. None of these documents discloses performing an operating system upgrade based on a log file of manipulation events in an operating system partition.

### SUMMARY

The invention is defined by the appended independent claims 1, 8 and 15. According to a first aspect of the present disclosure, there is provided a method for monitoring a file in a system partition, including: starting a monitoring service; creating a listening thread in the monitoring service to listen for an input event with respect to a target system partition, the input event being a manipulation of a file in the target system partition; and recording the input event into a log file when the input event with respect to the target system partition has been listened in the listening thread.

Alternatively, the monitoring service may be started during a system booting of the mobile terminal.

Alternatively, the input event may include at least one of file creation, file modification, file deletion, and file movement.

Alternatively, the method may further include classifying the listened input event and performing a corresponding security processing in accordance with the classification of the listened input event.

In a potential implementation of the first aspect, the performing may include: in case of the listened input event being an event of file creation, deleting a created file; in case of the listened input event being an event of file modification or file movement, determining whether the input event satisfies a preconfigured condition for reporting, and sending a report message when the preconfigured condition is satisfied; in case of the listened input event being an event of file modification or file deletion, backuping a file before the modification or deletion; and in case of the listened input event being an event of file deletion, sending a file restoration request when an access request for a deleted file is received, the file restoration request requesting to send the deleted file.

Alternatively, the method may further include configuring the log file with authorization protection, to restrict a deletion or modification of the log file by an unauthorized process.

Alternatively, the configuring may include: configuring the log file with Security-Enhanced Linux (SELinux) authorization protection.

According to a second aspect of embodiments of the present disclosure, a device for monitoring a file in a system partition is provided, the device including: a starting module configured to start a monitoring service; a listening module configured to create a listening thread in the monitoring service to listen for an input event with respect to a target system partition, the input event being a manipulation of a file in the target system partition; and a recording module configured to record the input event into a log file when the input event with respect to the target system partition has been listened in the listening thread.

Alternatively, the starting module may start the monitoring service during a system booting of the mobile terminal.

Alternatively, the input event may include at least one of file creation, file modification, file deletion, and file movement.

Alternatively, the device may further include a classification and security processing module configured to classify the listened input event and perform a corresponding security processing in accordance with the classification of the listened input event.

In a potential implementation of the second aspect, the classification and security processing module may include at least one of: a deletion sub-module configured to delete, in case of the listened input event being an event of file creation, a created file; a reporting sub-module configured to determine, in case of the listened input event being an event of file modification or file movement, whether the input event satisfies a preconfigured condition for reporting and send a report message when the preconfigured condition is satisfied; a backup sub-module configured to backup, in case of the listened input event being an event of file modification or file deletion, a file before the modification or deletion; and a file restoration requesting sub-module configured to send, in case of the listened input event being an event of file deletion, a file restoration request when an access request for a deleted file is received, the file restoration request requesting to send the deleted file.

Alternatively, the device may further include an authorization protection module configured to configure the log file with authorization protection, to restrict the deletion or modification of the log file by an unauthorized process.

Alternatively, the authorization protection may be Security-Enhanced Linux (SELinux) authorization protection.

According to a third aspect of embodiments of the present disclosure, there is provided an apparatus for monitoring a file in a system partition, including: a processor; a memory for storing instructions executable by the processor. The processor is configured to: start a monitoring service; create a listening thread in the monitoring service to listen for an input event with respect to a target system partition, the input event being a manipulation of a file in the target system partition; and record the input event into a log file when the input event with respect to the target system partition has been listened in the listening thread.

Embodiments of the disclosure may provide at least some of the following beneficial effects: by creating a listening thread to listen a file in a target system partition, and then recording any input event happened to the file in the target system partition, it is capable of knowing what kind of manipulation has been done to the file in the target system partition by other software. Based on this disclosure, if there exists any defects or modifications in the file of the target system partition, it can be know by reference to the log file when an OTA system version upgrade is performed thereafter. Subsequently, this file may be targeted to be repaired, in order to avoid the issue of upgrade failure.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow diagram illustrating a method for monitoring a file in a system partition according to an exemplary embodiment.
Fig. 2 is a flow diagram illustrating a method for monitoring a file in a system partition according to another exemplary embodiment.
Fig. 3 is a flow diagram illustrating a method for monitoring a file in a system partition according to another exemplary embodiment.
Fig. 4 is a block diagram illustrating a device for monitoring a file in a system partition according to an exemplary embodiment.
Fig. 5 is a block diagram illustrating a device for monitoring a file in a system partition according to another exemplary embodiment.
Fig. 6 is a block diagram illustrating a classification and security processing module according to an exemplary embodiment.
Fig. 7 is a block diagram illustrating a device for monitoring a file in a system partition according to an exemplary embodiment.
Fig. 8 is a block diagram illustrating a device for monitoring a file in a system partition according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of devices and methods consistent with aspects related to the invention as recited in the appended claims.

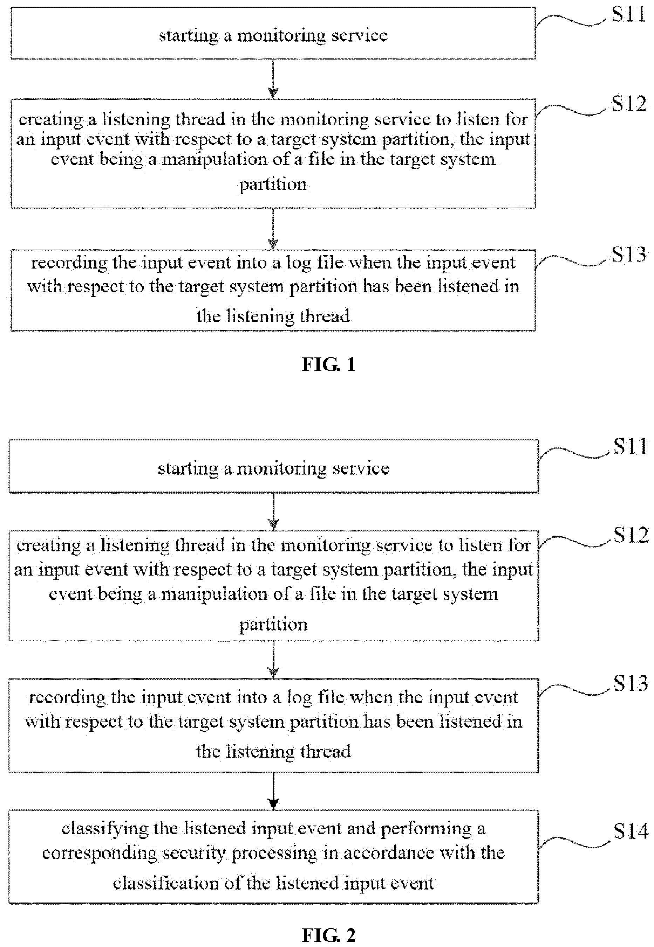

Fig. 1 is a flow diagram illustrating a method for monitoring a file in a system partition according to an exemplary embodiment. As illustrated in Fig. 1, the method for monitoring a file in a system partition may be applied in a mobile terminal, and may include the following steps: in step S11, starting a monitoring service; in step S12, creating a listening thread in the monitoring service to listen for an input event with respect to a target system partition; in step S13, when the input event with respect to the target system partition has been listened in the listening thread, recording the input event into a log file. The above steps will be illustrated below with more details.

In step S11, the monitoring service is started. Alternatively, the monitoring service is started during a system booting of the mobile terminal. In this way, all the variations happened in the file of the target system partition can be completely recorded.

In step S12, the listening thread is created in the monitoring service. For example, in a Android system based on Linux, a FileObserver Class may be used to create the listening thread. The FileObserver Class is an observer for listening for manipulations such as access, creation, modification, deletion, or movement of a file. This observer may observe a individual file or a file folder. If a file folder is being observed, then all the files and cascaded subdirectories within the file folder will be observed. In the present disclosure, the created listening thread is used to listen or observe the target system partition, which is directed to a file folder(s) corresponding to the System partition in the Android system.

Subsequently, the created listening thread may be used to listen for an input event with respect to the target system partition. In the Android system, for example, this may be observed by a so called "inotify" mechanism in Linux.

Herein, the input event may be a kind of manipulation of a file in the target system partition. More particular, the input event may include, but not limited to at least one of: file creation (CREAT), file modification (MODIFY), file deletion (DELETE), and file movement (MOVE).

In step S13, when the input event with respect to the target system partition has been listened in the listening thread, the input event, such as file A being amended by program XX into ..., or file B being deleted by program XX, etc, is recorded into a log file. This is to say, if another program performs such input event to a file in the target system partition, then the above input event may have been listened and recorded by a listening program. Accordingly, all the variations happened to files in the target system partition may be logged, and based on the log file, when performing an OTA system version upgrade thereafter, it is capable of knowing whether there exists any defects, modifications in the files of the target system partition. In turn, the defected or modified files may be repaired specifically.

Alternatively or additionally, the listened input event may be classified in the present disclosure. Fig. 2 is a flow diagram illustrating a method for monitoring a file in a system partition according to another exemplary embodiment. Steps S11, S12, and S13 shown in the figure are same as those in Fig. 1. Moreover, this method may further include: in step S14, classifying the listened input event and performing a corresponding security processing in accordance with the classification of the listened input event.

Different security handlings may be performed for different kinds of input events, depending on risks possibly generated by these input events. Some possible security handlings are listed as below, although those skilled in the art may appreciate that the means for security processing is not limited thereto.

Regarding input events belonging to a classification of file creation (CREAT), besides being recorded, a created file may be deleted.

Regarding input events belonging to a classification of file modification (MODIFY), file deletion (DELETE), or file movement (MOVE), these kinds of manipulations will not be stopped, except for being recorded. However, it is also possible to precede following security processing.

In case of the listened input event being an event of file modification or file movement, it is determined whether the input event satisfies a preconfigured condition for reporting, and if the preconfigured condition is satisfied, then a report message will be sent. The preconfigured condition for reporting may be, for example, the input event being performed by a target program (e.g., some baleful program). At this time, the mobile terminal's user may be prompted (i.e., the report message is sent out). Alternatively, the report message may be sent to a server such that the server determines if it is necessary to stop or restore the input event.

In case of the listened input event being an event of file modification or file deletion, a file before the modification or deletion may be backed up. This is for the purpose of keeping the original file, and thus in case that this file has been maliciously deleted or modified such that the system upgrade cannot be performed for the file being defected, the original file may be retrieved directly within the mobile terminal for system upgrade.

In an alternative implementation of this embodiment, the original file may not be kept, to avoid unnecessary storage of too much useless data. In this implementation, in case of the listened input event being an event of file deletion, a file restoration request is sent when an access request for a deleted file is received. The file restoration request may be used for requesting to send the deleted file. The file has been deleted, but if it is necessary for the system upgrade, an access request for the deleted file will be generated. At this time, the mobile terminal may send a file restoration request to a server, and the server in turn may resend the deleted file to the mobile terminal for file restoration. Accordingly, the system upgrade may be performed successfully.

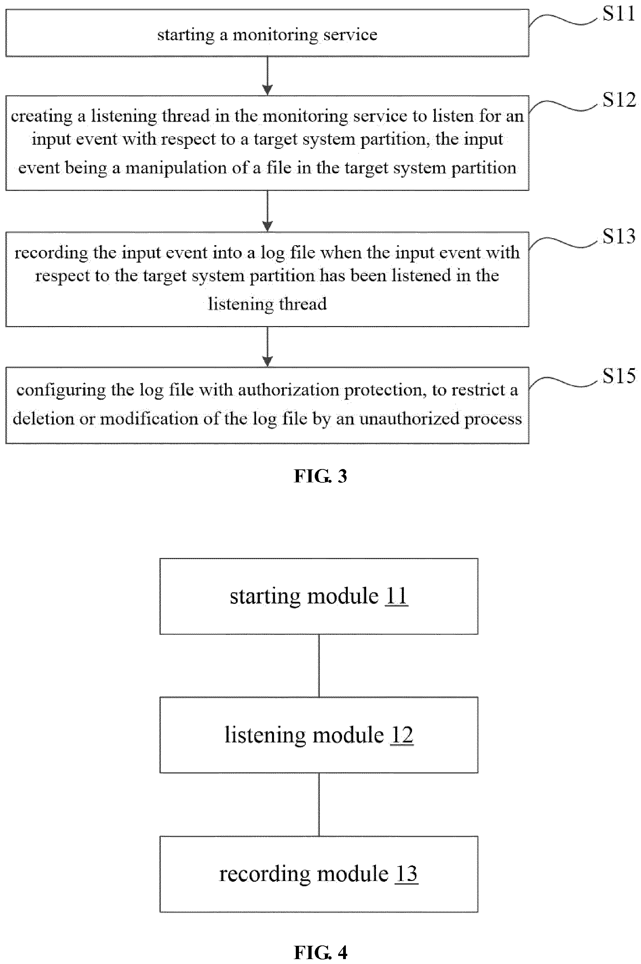

As shown in Fig. 3, which depicts a flow diagram illustrating a method for monitoring a file in a system partition according to another exemplary embodiment, the steps S11, S12, S13 are the same as those of Fig. 1. Other than this, the disclosure also provides a mechanism for preventing a manipulation or deletion of a log file recording input events. The method may further include: in step S15, configuring the log file with authorization protection, to restrict a deletion or modification of the log file by an unauthorized process. In this way, even if some process may have a root privilege (a supervisor privilege), this process cannot delete or modify the log file. With respect to a system based on Linux, a Security-Enhanced Linux (SELinux) authorization protection may be used.

In this embodiment, authorized processes may be defined by the system. For example, the listening thread may be defined as an authorized process.

Fig. 4 is a block diagram illustrating a device for monitoring a file in a system partition according to an exemplary embodiment. Referring to Fig. 4, the device may include a starting module 11, a listening module 12 and a recording module 13.

The starting module 11 is configured to start a monitoring service. According to an alternative implementation, the starting module 11 may start the monitoring service during a system booting of the mobile terminal.

The listening module 12 is configured to create a listening thread in the monitoring service to listen for an input event with respect to a target system partition, wherein the input event is a manipulation of a file in the target system partition.

The recording module 13 is configured to record the input event into a log file when the input event with respect to the target system partition has been listened in the listening thread. The input event may include at least one of file creation, file modification, file deletion, and file movement.

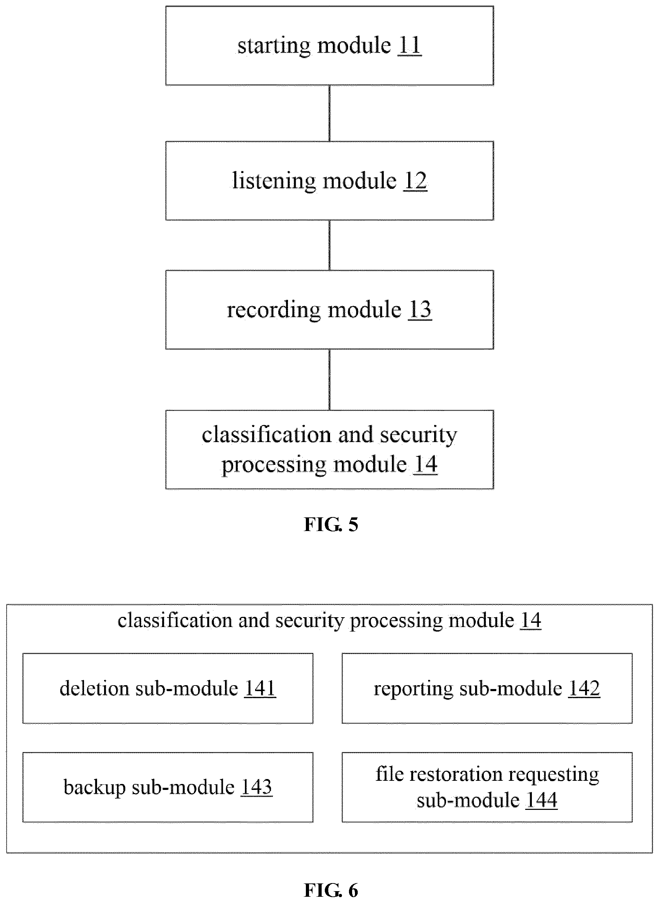

Fig. 5 is a block diagram illustrating a device for monitoring a file in a system partition according to another exemplary embodiment. Except for the structure shown in Fig. 4, the device may further include: a classification and security processing module 14 configured to classify the listened input event and perform a corresponding security processing in accordance with the classification of the listened input event.

According to one implementation, as shown in Fig. 6, a block diagram illustrating a classification and security processing module 14 according to an exemplary embodiment is provided. The classification and security processing module 14 may include at least one of: a deletion sub-module 141 configured to delete, in case of the listened input event being an event of file creation, a created file; a reporting sub-module 142 configured to determine , in case of the listened input event being an event of file modification or file movement, whether the input event satisfies a preconfigured condition for reporting and send a report message when the preconfigured condition is satisfied; a backup sub-module 143 configured to backup, in case of the listened input event being an event of file modification or file deletion, a file before the modification or deletion; and a file restoration requesting sub-module 144 configured to send, in case of the listened input event being an event of file deletion, a file restoration request when an access request for a deleted file is received, the file restoration request requesting to send the deleted file.

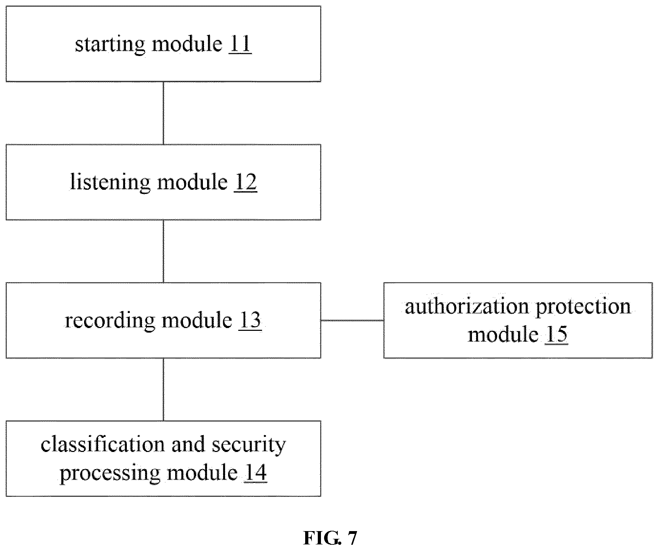

Moreover, according to another implementation, as shown in Fig. 7, the device may further include: an authorization protection module 15 configured to configure the log file with authorization protection, to restrict the deletion or modification of the log file by an unauthorized thread.

With respect to the devices in the above embodiments, the specific manners that the respective modules perform operations have been described in detail in the embodiments regarding the relevant methods, and will not be elaborated herein.

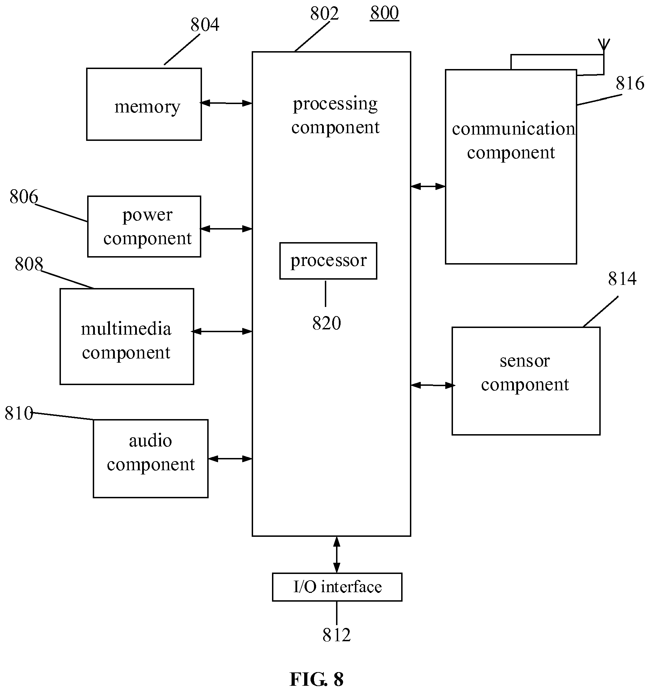

Fig. 8 is a block diagram of an device 100 for monitoring a file in a system partition according to an exemplary embodiment. For example, the device 100 may be a mobile phone, a computer, a digital broadcast terminal, a messaging device, a gaming console, a tablet, a medical device, an exercise equipment, a personal digital assistant, and the like.

Referring to Fig. 8, the device 100 may include one or more of the following components: a processing component 102, a memory 104, a power component 106, a multimedia component 108, an audio component 110, an input/output (I/O) interface 112, a sensor component 114, and a communication component 116.

The processing component 102 typically controls overall operations of the device 100, such as the operations associated with display, telephone calls, data communications, camera operations, and recording operations. The processing component 102 may include one or more processors 120 to execute instructions to perform all or part of the steps in the above described methods. Moreover, the processing component 102 may include one or more modules which facilitate the interaction between the processing component 102 and other components. For instance, the processing component 102 may include a multimedia module to facilitate the interaction between the multimedia component 108 and the processing component 102.

The memory 104 is configured to store various types of data to support the operation of the device 100. Examples of such data include instructions for any applications or methods operated on the device 100, contact data, phonebook data, messages, pictures, video, etc. The memory 104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 106 provides power to various components of the device 100. The power component 106 may include a power management system, one or more power sources, and any other components associated with the generation, management, and distribution of power for the device 100.

The multimedia component 108 includes a screen providing an output interface between the device 100 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 108 includes a front camera and/or a rear camera. The front camera and the rear camera may receive an external multimedia datum while the device 100 is in an operation mode, such as a photographing mode or a video mode. Each of the front camera and the rear camera may be a fixed optical lens system or have optical focusing and zooming capability.

The audio component 110 is configured to output and/or input audio signals. For example, the audio component 110 includes a microphone ("MIC") configured to receive an external audio signal when the device 100 is in an operation mode, such as a call mode, a recording mode, and a voice recognition mode. The received audio signal may be further stored in the memory 104 or transmitted via the communication component 116. In some embodiments, the audio component 110 further includes a speaker to output audio signals.

The I/O interface 112 provides an interface between the processing component 102 and peripheral interface modules, the peripheral interface modules being, for example, a keyboard, a click wheel, buttons, and the like. The buttons may include, but are not limited to, a home button, a volume button, a starting button, and a locking button.

The sensor component 114 includes one or more sensors to provide status assessments of various aspects of the device 100. For instance, the sensor component 114 may detect an open/closed status of the device 100, relative positioning of components (e.g., the display and the keypad, of the device 100), a change in position of the device 100 or a component of the device 100, a presence or absence of user contact with the device 100, an orientation or an acceleration/deceleration of the device 100, and a change in temperature of the device 100. The sensor component 114 may include a proximity sensor configured to detect the presence of a nearby object without any physical contact. The sensor component 114 may also include a light sensor, such as a CMOS or CCD image sensor, for use in imaging applications. In some embodiments, the sensor component 114 may also include an accelerometer sensor, a gyroscope sensor, a magnetic sensor, a pressure sensor, or a temperature sensor.

The communication component 116 is configured to facilitate communication, wired or wirelessly, between the device 100 and other devices. The device 100 can access a wireless network based on a communication standard, such as WiFi, 2G, or 3G, or a combination thereof. In an exemplary embodiment, the communication component 116 receives a broadcast signal or broadcast associated information from an external broadcast management system via a broadcast channel. In an exemplary embodiment, the communication component 116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 104, executable by the processor 120 in the device 100, for performing the above-described methods. For example, the non-transitory computer-readable storage medium may be a ROM, a RAM, a CD-ROM, a magnetic tape, a floppy disc, an optical data storage device, and the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the disclosures herein. It is intended that the specification and examples be considered as exemplary only, with a true scope of the invention being indicated by the following claims.

## Claims

1. A method for monitoring a file in a system partition of an operating system in a mobile terminal, comprising:
starting (S11) a monitoring service;
creating (S12) a listening thread in the monitoring service to listen for an input event with respect to the system partition, the input event being a manipulation of a file in the system partition;
recording (S13) the input event into a log file when the input event with respect to the system partition has been listened to by the listening thread; and
performing version upgrade of an operating system of the mobile terminal based on the log file.

2. The method of claim 1, wherein the monitoring service is started during a system booting of the mobile terminal.

3. The method of claim 1 or claim 2, wherein the input event comprises at least one of file creation, file modification, file deletion, and file movement.

4. The method of claim 3, further comprising:
classifying (S14) the listened to input event; and
performing (S14) a corresponding security processing in accordance with the classification of the listened to input event.

5. The method of claim 4, wherein the performing (S14) comprises at least one of:
deleting a created file in case of the listened to input event being an event of file creation;
determining whether the input event satisfies a preconfigured condition for reporting in case of the listened to input event being an event of file modification or file movement, and sending a report message when the preconfigured condition is satisfied;
backuping a file before the modification or deletion in case of the listened to input event being an event of file modification or file deletion; and
sending a file restoration request when an access request for a deleted file is received in case of the listened to input event being an event of file deletion, the file restoration request requesting to send the deleted file.

6. The method of any of claims 1-5, further comprising:
configuring (S15) the log file with authorization protection to restrict a deletion or modification of the log file by an unauthorized process.

7. The method of claim 6, wherein the configuring (S15) comprises:
configuring the log file with Security-Enhanced Linux (SELinux) authorization protection.

8. A device for monitoring a file in a system partition of an operating system in a mobile terminal, comprising:
a starting module (11) configured to start a monitoring service;
a listening module (12) configured to create a listening thread in the monitoring service to listen for an input event with respect to the system partition, the input event being a manipulation of a file in the system partition; and
a recording module (13) configured to record the input event into a log file when the input event with respect to the system partition has been listened to by the listening thread, and
means for performing version upgrade of an operating system of the mobile terminal based on the log file.

9. The device of claim 8, wherein the monitoring service is started by the starting module (11) during a system booting of the mobile terminal.

10. The device of claim 8 or claim 9, wherein the input event includes at least one of file creation, file modification, file deletion, and file movement.

11. The device of claim 10, further comprising:
a classification and security processing module (14) configured to classify the listened to input event and perform a corresponding security processing in accordance with the classification of the listened to input event.

12. The device of claim 11, wherein the classification and security processing module (14) comprises at least one of:
a deletion sub-module (141) configured to delete, in case of the listened to input event being an event of file creation, a created file;
a reporting sub-module (142) configured to determine, in case of the listened to input event being an event of file modification or file movement, whether the input event satisfies a preconfigured condition for reporting and send a report message when the preconfigured condition is satisfied;
a backup sub-module (143) configured to backup, in case of the listened to input event being an event of file modification or file deletion, a file before the modification or deletion; and
a file restoration requesting sub-module (144) configured to send, in case of the listened to input event being an event of file deletion, a file restoration request when an access request for a deleted file is received, the file restoration request requesting to send the deleted file.

13. The device of any of claims 8-12, further comprising:
an authorization protection module (15) configured to configure the log file with authorization protection to restrict the deletion or modification of the log file by an unauthorized process, wherein the authorization protection may be Security-Enhanced Linux (SELinux) authorization protection.

14. The device of any of claim 8, further comprising:
a processor (120);
a memory (104) for storing instructions executable by the processor;
wherein the processor is configured to function as the starting module (11), the listening module (12), the recording module (13) and the means for performing version upgrade.

15. A computer program including instructions for executing the steps of a method for monitoring a file in a system partition of an operating system in a mobile terminal according to any of claims 1 to 7 when said program is executed by a computer.

## Patentansprüche

1. Verfahren zum Überwachen einer Datei in einer Systempartition eines Betriebssystems in einem mobilen Endgerät, aufweisend:
Starten (S11) eines Überwachungsdienstes;
Erstellen (S12) eines Abhör-Threads im Überwachungsdienst zum Abhören auf ein Eingabeereignis in Bezug auf die Systempartition, wobei das Eingabeereignis eine Manipulation einer Datei in der Systempartition ist;
Aufzeichnen (S13) des Eingabeereignisses in einer Logdatei, wenn das Eingabeereignis in Bezug auf die Systempartition von dem Abhör-Thread abgehört wurde; und
Durchführen eines Versions-Upgrades eines Betriebssystems des mobilen Endgeräts auf Basis der Logdatei.

2. Verfahren nach Anspruch 1, wobei der Überwachungsdienst während eines System-Hochfahrens des mobilen Endgeräts gestartet wird.

3. Verfahren nach Anspruch 1 oder Anspruch 2, wobei das Eingabeereignis wenigstens eines von Dateierstellung, Dateimodifikation, Dateilöschung und Dateiverschiebung ist.

4. Verfahren nach Anspruch 3, das ferner aufweist:
Klassifizieren (S14) des abgehörten Eingabeereignisses und
Durchführen (S14) einer entsprechenden Sicherheitsverarbeitung gemäß der Klassifizierung des abgehörten Eingabeereignisses.

5. Verfahren nach Anspruch 4, wobei das Durchführen (S14) wenigstens eines der Folgenden aufweist:
Löschen einer erstellten Datei im Fall, dass das abgehörte Eingabeereignis ein Dateierstellungsereignis ist;
Bestimmen, ob das Eingabeereignis eine vorkonfigurierte Bedingung zum Melden erfüllt, falls das abgehörte Eingabeereignis ein Dateimodifikations- oder Dateiverschiebungsereignis ist, und Senden einer Meldenachricht, wenn die vorkonfigurierte Bedingung erfüllt wird;
Sichern einer Datei vor der Modifikation oder dem Löschen, falls das abgehörte Eingabeereignis ein Dateimodifikations- oder Dateilöschungsereignis ist; und
Senden einer Dateiwiederherstellungsanforderung, wenn eine Zugriffsanforderung für eine gelöschte Datei empfangen wird, falls das abgehörte Eingabeereignis ein Dateilöschungsereignis ist, wobei die Dateiwiederherstellungsanforderung das Senden der gelöschten Datei anfordert.

6. Verfahren nach einem der Ansprüche 1 bis 5, das ferner aufweist:
Konfigurieren (S15) der Logdatei mit Berechtigungsschutz zum Beschränken einer Löschung oder Modifikation der Logdatei durch einen unberechtigten Prozess.

7. Verfahren nach Anspruch 6, wobei das Konfigurieren (S15) aufweist:
Konfigurieren der Logdatei mit Security-Enhanced Linux-(SELinux) -Berechtigungsschutz.

8. Vorrichtung zum Überwachen einer Datei in einer Systempartition eines Betriebssystems in einem mobilen Endgerät, aufweisend:
ein Startmodul (11), das zum Starten eines Überwachungsdienstes konfiguriert ist;
ein Abhörmodul (12), das zum Erstellen eines Abhör-Threads im Überwachungsdienst zum Abhören auf ein Eingabeereignis in Bezug auf die Systempartition konfiguriert ist, wobei das Eingabeereignis eine Manipulation einer Datei in der Systempartition ist; und
ein Aufzeichnungsmodul (13), das zum Aufzeichnen des Eingabeereignisses in einer Logdatei, wenn das Eingabeereignis in Bezug auf die Systempartition von dem Abhör-Thread abgehört wurde, konfiguriert ist; und
ein Mittel zum Durchführen eines Versions-Upgrades eines Betriebssystems des mobilen Endgeräts auf Basis der Logdatei.

9. Vorrichtung nach Anspruch 8, wobei der Überwachungsdienst während eines System-Hochfahrens des mobilen Endgeräts durch das Startmodul (11) gestartet wird.

10. Vorrichtung nach Anspruch 8 oder Anspruch 9, wobei das Eingabeereignis wenigstens eines von Dateierstellung, Dateimodifikation, Dateilöschung und Dateiverschiebung beinhaltet.

11. Vorrichtung nach Anspruch 10, die ferner aufweist:
ein Klassifizierungs- und Sicherheitsverarbeitungsmodul (14), das zum Klassifizieren des abgehörten Eingabeereignisses und zum Durchführen einer entsprechenden Sicherheitsverarbeitung gemäß der Klassifizierung des abgehörten Eingabeereignisses konfiguriert ist.

12. Vorrichtung nach Anspruch 11, wobei das Klassifizierungs- und Sicherheitsverarbeitungsmodul (14) wenigstens eines der Folgenden aufweist:
ein Löschungssubmodul (141), das zum Löschen einer erstellten Datei im Fall, dass das abgehörte Eingabeereignis ein Dateierstellungsereignis ist, konfiguriert ist;
ein Meldungssubmodul (142), das zum Bestimmen, ob das Eingabeereignis eine vorkonfigurierte Bedingung zum Melden erfüllt, falls das abgehörte Eingabeereignis ein Dateimodifikations- oder Dateiverschiebungsereignis ist, und zum Senden einer Meldenachricht, wenn die vorkonfigurierte Bedingung erfüllt wird, konfiguriert ist;
ein Sicherungssubmodul (143), das zum Sichern einer Datei vor der Modifikation oder dem Löschen, falls das abgehörte Eingabeereignis ein Dateimodifikations- oder Dateilöschungsereignis ist, konfiguriert ist; und
ein eine Dateiwiederherstellung anforderndes Submodul (144), das konfiguriert ist zum Senden einer Dateiwiederherstellungsanforderung, wenn eine Zugriffsanforderung für eine gelöschte Datei empfangen wird, falls das abgehörte Eingabeereignis ein Dateilöschungsereignis ist, wobei die Dateiwiederherstellungsanforderung das Senden der gelöschten Datei anfordert.

13. Vorrichtung nach einem der Ansprüche 8 bis 12, die ferner aufweist:
ein Berechtigungsschutzmodul (15), das zum Konfigurieren der Logdatei mit Berechtigungsschutz zum Beschränken der Löschung oder Modifikation der Logdatei durch einen unberechtigten Prozess konfiguriert ist, wobei der Berechtigungsschutz Security-Enhanced Linux- (SELinux) -Berechtigungsschutz sein kann.

14. Vorrichtung nach Anspruch 8, die ferner aufweist:
einen Prozessor (120);
einen Speicher (104) zum Speichern von durch den Prozessor ausführbaren Anweisungen;
wobei der Prozessor zum Funktionieren als das Startmodul (11), das Abhörmodul (12), das Aufzeichnungsmodul (13) und das Mittel zum Durchführen eines Versions-Upgrades konfiguriert ist.

15. Computerprogramm mit Anweisungen zum Ausführen der Schritte eines Verfahrens zum Überwachen einer Datei in einer Systempartition eines Betriebssystems in einem mobilen Endgerät nach einem der Ansprüche 1 bis 7, wenn das genannte Programm von einem Computer ausgeführt wird.

## Revendications

1. Procédé de surveillance d'un fichier dans une partition de système d'un système d'exploitation dans un terminal mobile, comprenant :
le lancement (S11) d'un service de surveillance ;
la création (S12) d'un fil d'écoute dans le service de surveillance pour rechercher et écouter un événement d'entrée relativement à la partition de système, l'événement d'entrée étant une manipulation d'un fichier dans la partition de système ;
l'enregistrement (S13) de l'événement d'entrée dans un fichier de consignation quand l'événement d'entrée relativement à la partition de système a été écouté par le fil d'écoute ; et l'exécution d'une mise à niveau de version d'un système d'exploitation du terminal mobile d'après le fichier de consignation.

2. Procédé selon la revendication 1, dans lequel le service de surveillance est lancé durant un amorçage de système du terminal mobile.

3. Procédé selon la revendication 1 ou la revendication 2, dans lequel l'événement d'entrée comprend au moins l'un d'une création de fichier, d'une modification de fichier, d'une suppression de fichier et d'un déplacement de fichier.

4. Procédé selon la revendication 3, comprenant en outre :
la classification (S14) de l'événement d'entrée écouté ; et
l'exécution (S14) d'un traitement de sécurité correspondant en fonction de la classification de l'événement d'entrée écouté.

5. Procédé selon la revendication 4, dans lequel l'exécution (S14) comprend au moins l'un :
d'une supression d'un fichier créé si l'événement d'entrée écouté est un événément de création de fichier ;
d'une détermination que l'événement d'entrée satisfait ou non une condition préconfigurée de rapport si l'événement d'entrée écouté est un événément de modification de fichier ou de déplacement de fichier, et d'un envoi d'un message de rapport quand la condition préconfigurée est satisfaite ;
d'une sauvegarde d'un fichier avan la modification ou suppression si l'événement d'entrée écouté est un événément de modification de fichier ou de suppession de fichier ; et
d'un envoi d'une demande de restauration de fichier quand une demande d'accès à un fichier supprimé est reçue si l'événement d'entrée écouté est un événément de suppression de fichier, la demande de restauration de fichier demandant d'envoyer le fichier suprimé.

6. Procédé selon l'une quelconque des revendications 1 à 5, comprenant en outre :
la configuration (S15) du fichier de consignation avec une protection d'authorisation pour restreindre une suppression ou modification du fichier de consignation par un processus non autorisé.

7. Procédé selon la revendication 6, dans lequel la configuration (S 15) comprend :
la configuration du fichier de consignation avec une protection d'autorisation Security-Enhanced Linux (SELinux).

8. Dispositif de surveillance d'un fichier dans une partition de système d'un système d'exploitation dans un terminal mobile, comprenant :
un module de lancement (11) configuré pour lancer un service de surveillance ;
un module d'écoute (12) configuré pour créer un fil d'écoute dans le service de surveillance pour rechercher et écouter un événement d'entrée relativement à la partition de système, l'événement d'entrée étant une manipulation d'un fichier dans la partition de système ; et
un module d'enregistrement (13) configuré pour enregistrer l'événement d'entrée dans un fichier de consignation quand l'événement d'entrée relativement à la partition de système a été écouté par le fil d'écoute, et
un moyen d'exécution d'une mise à niveau de version d'un système d'exploitation du terminal mobile d'après le fichier de consignation.

9. Dispositif selon la revendication 8, dans lequel le service de surveillance est lancé par le module de lancement (11) durant un amorçage de système du terminal mobile.

10. Dispositif selon la revendication 8 ou la revendication 9, dans lequel l'événement d'entrée comprend au moins l'un d'une création de fichier, d'une modification de fichier, d'une suppression de fichier et d'un déplacement de fichier.

11. Dispositif selon la revendication 10, comprenant en outre :
un module de classification et de traitement de sécurité (14) configué pour classifier l'événement d'entrée écouté et exécuter un traitement de sécurité correspondant en fonction de la classification de l'événement d'entrée écouté.

12. Dispositif selon la revendication 11, dans lequel le module de classification et de traitement de sécurité (14) comprend au monis l'un :
d'un sous-module de suppression (141) configuré pour supprimer, si l'événement d'entrée écouté est un événément de création de fichier, un fichier créé ;
un sous-module de rapport (142) configuré pour déterminer, si l'événement d'entrée écouté est un événément de modification de fichier ou de déplacement de fichier, que l'événement d'entrée satisfait ou non une condition préconfigurée de rapport et envoyer un message de rapport quand la condition préconfigurée est satisfaite ;
un sous-module de sauvegarde (143) configuré pour sauvegarder, si l'événement d'entrée écouté est un événement de modification de fichier ou de suppression de fichier, un fichier avant la modification ou la suppression ; et
un sous-module de demande de restauration de fichier (144) configuré pour envoyer, si l'événement d'entrée écouté est un événément de suppression de fichier, une demande de restauration de fichier quand une demande d'accès d'un fichier supprimé est reçu, la demande de restauration de fichier demandant d'envoyer le fichier supprimé.

13. Dispositif selon l'une quelconque des revendications 8 à 12, comprenant en outre :
un module de protection d'autorisation (15) configuré pour configurer le fichier de consignation avec une protection d'authorisation pour restreindre la suppression ou modification du fichier de consignation par un processus non autorisé, dans lequel la protection d'autorisation peut être une protection d'autorisation Security-Enhanced Linux (SELinux).

14. Dispositif selon la revendication 8, comprenant en outre :
un processseur (120) ;
une mémoire (104) pour mémoriser des instructions exécutable par le processeur ;
dans lequel le processeur est configuré pour fonctionner en tant que module de lancement (11), module d'écoute (12), module d'enregistrement (13) et moyen d'exécution d'un mise à niveau de version.

15. Programme informatique comportant des instructions pour exécuter les étapes d'un procédé de suveillance d'un fichier dans une partition de système d'un système d'exploitation dans un terminal mobile selon l'une quelconque des revendications 1 à 7 quand ledit programme est exécuté par un ordinateur.
